(19) Europäisches Patentamt
European Patent Office
Office européen des brevets

(11) **EP 1 708 912 B1**

(12) **EUROPÄISCHE PATENTSCHRIFT**

(45) Veröffentlichungstag und Bekanntmachung des Hinweises auf die Patenterteilung:
**07.10.2015 Patentblatt 2015/41**

(21) Anmeldenummer: **05701248.6**

(22) Anmeldetag: **28.01.2005**

(51) Int Cl.:
***B60T 7/10*** *(2006.01)* ***B60T 7/12*** *(2006.01)*

(86) Internationale Anmeldenummer:
**PCT/EP2005/000878**

(87) Internationale Veröffentlichungsnummer:
**WO 2005/073043 (11.08.2005 Gazette 2005/32)**

(54) **VERFAHREN ZUM BETREIBEN DER BREMSAUSRÜSTUNG EINES FAHRZEUGS**

METHOD FOR OPERATING THE BRAKE GEAR OF A VEHICLE

PROCEDE POUR FAIRE FONCTIONNER L'EQUIPEMENT DE FREINAGE D'UN VEHICULE

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **30.01.2004 DE 102004004992**

(43) Veröffentlichungstag der Anmeldung:
**11.10.2006 Patentblatt 2006/41**

(73) Patentinhaber: **Lucas Automotive GmbH**
**56070 Koblenz (DE)**

(72) Erfinder:
• **LEITER, Ralf**
**56743 Mendig (DE)**
• **POERTZGEN, Gregor**
**56068 Koblenz (DE)**

(74) Vertreter: **Thum, Bernhard**
**Wuesthoff & Wuesthoff**
**Patentanwälte PartG mbB**
**Schweigerstraße 2**
**81541 München (DE)**

(56) Entgegenhaltungen:
**WO-A-99/38738 DE-A1- 10 104 498**
**US-A1- 2001 023 799**

EP 1 708 912 B1

## Beschreibung

Die Erfindung betrifft ein Verfahren zum Betreiben der Bremsausrüstung eines Fahrzeugs nach dem Oberbegriff von Patentanspruch 1. Die Erfindung betrifft ferner eine Bremsausrüstung nach dem Oberbegriff von Patentanspruch 7, die eine elektrisch steuerbare Betriebsbremsanlage, die dazu eingerichtet ist, unabhängig von einer Fahrerbetätigung Bremskräfte zu erzeugen, und eine elektrisch steuerbare Feststellbremsanlage aufweist, die dazu eingerichtet ist, Bremskräfte zu erzeugen und diese zu halten.

Aufgrund der Betriebsbremsanlage ist es dem Fahrer möglich, mit abstufbarer Wirkung die Geschwindigkeit des Fahrzeugs während seines Betriebs zu verringern oder das Fahrzeug zum Stillstand zu bringen. Moderne Fahrzeuge werden heute mit einer elektrisch steuerbaren Betriebsbremsanlage ausgerüstet, um neben der Antiblockierregelfunktion (ABS), auch von einer Fahrerbetätigung unabhängige, also automatische Bremsfunktionen, wie z.B. Antriebsschlupfregelung (ASR) oder Fahrdynamikregelung (ESP) ausführen zu können. Dazu umfasst die Betriebsbremsanlage in bekannter Weise eine entsprechend ausgestaltete elektrohydraulische Steuereinheit, einen elektronisch steuerbaren Bremskraftverstärker oder ist als so bezeichnete "Brake-by-Wire" Anlage ausgebildet.

Demgegenüber ermöglicht es die Feststellbremsanlage, das Fahrzeug auch auf einer geneigten Fahrbahn und insbesondere in Abwesenheit des Fahrers mit mechanischen Mitteln im Stillstand zu halten. Es wird heute angestrebt, auch die Feststellbremsanlage elektrisch steuerbar auszuführen, so wie es z.B. unter der Bezeichnung "elektrische Parkbremse" (EPB) bereits bekannt ist. Dabei braucht der Fahrer nur ein elektrisches Schaltelement zu betätigen, über das wenigstens eine elektromechanische Betätigungseinheit zur Betätigung der eigentlichen Radbremsen angesteuert wird. Während beim so bezeichneten "Cable-Puller" nur eine zentrale elektromechanische Betätigungseinheit zum Einsatz kommt, die das konventionelle Parkbremsbetätigungselement (Hebel oder Pedal) ersetzt und in konventioneller Weise über Seile auf die betreffenden Radbremsen wirkt, gibt es auch EPB-Systeme mit in der Regel zwei dezentralen elektromechanischen Betätgungseinheiten, die unmittelbar an den betreffenden Radbremsen angebaut bzw. integriert sind.

So ist aus der DE 101 50 803 A1 eine Radbremse bekannt, die für den Funktionsumfang der Betriebsbremsanlage in konventioneller Weise hydraulisch betätigbar ist. Dazu weist die Radbremse einen Bremskolben auf, der auf wenigstens einen Reibbelag wirkt und mittels eines in eine Hydraulikkammer eingeleiteten Hydraulikdrucks verschiebbar ist, um zum Erzeugen von Bremskraft den wenigstens einen Reibbelag gegen ein mit einem Rad des Fahrzeugs drehfest verbundenes Drehglied zu spannen. Um auch die Funktionen der Feststellbremsanlage ausführen zu können, ist in die Radbremse weiterhin eine elektromechanische Betätigungseinheit integriert, die eine von einem Elektromotor angetriebene Getriebeeinheit aufweist, die auf den Bremskolben wirkt, um diesen zum Erzeugen von Bremskraft gegen das mit einem Rad des Fahrzeugs drehfest verbundene Drehglied zu spannen und mechanisch festzustellen, wozu die Getriebeeinheit selbsthemmend ausgebildet ist.

Eine Bremsausrüstung mit einer wie aus der DE 101 50 803 A1 bekannten Radbremse weist den Nachteil auf, dass die für die Feststellbremsanlage vorgesehene elektromechanische Betätigungseinheit auch für solche Lastfälle ausgelegt sein muss, in denen sehr hohe Bremskräfte zu erzeugen und zu halten sind, um z.B. ein voll beladenes Fahrzeug auf einer um 30 Prozent und steiler geneigten Fahrbahn sicher im Stillstand zu halten. Demzufolge ist für die elektromechanische Betätigungseinheit ein verhältnismäßig hoher technischer Aufwand zu erbringen, wodurch sich die Bremsausrüstung des Fahrzeugs in einem nicht unerheblichen Maße verteuert.

Aus dem Dokument US 2001/0023799 A1 ist eine Fahrzeugbremsanlage bekannt, die vorsieht, dass die Parkbremse in Abhängigkeit von der aktuellen Fahrsituation des Fahrzeugs angesteuert wird. Insbesondere wird darin das Problem beschrieben, dass eine elektrische Parkbremse "dynamisch" aktiviert werden kann, d.h. dann, während das Fahrzeug sich bewegt. Für diesen Fall muss vorgesehen sein, dass die Parkbremse so angesteuert wird, dass eine kontrollierte Bremsung durchgeführt wird. Um dies zu gewährleisten, sieht das Dokument vor, dass je nach Fahrsituation die eine oder andere Steuereinheit aktiviert wird.

Von daher liegt der Erfindung die Aufgabe zugrunde, ein Verfahren zum Betreiben einer eingangs genannten Bremsausrüstung anzugeben, durch das die Feststellbremsanlage bzw. deren elektromechanische Betätigungseinheit geringeren Lastfällen zu genügen braucht, um vorstehende Nachteile zu vermeiden.

Zur Lösung dieser Aufgabe schlägt das erfindungsgemäße Verfahren die Merkmale des Patentanspruchs 1 vor, wobei die Feststellbremsanlage selbsthemmend ausgebildet ist und dadurch dazu ausgelegt ist, Bremskräfte zu Halten, die größer sind als die Bremskräfte, die sie selbst erzeugen kann, wobei dann, wenn die Feststellbremsanlage für bestimmte Betriebszustände erforderliche Bremskräfte zu halten hat, die größer sind als die Bremskräfte, die sie selbst erzeugen kann, die Betriebsbremsanlage die zusätzlich benötigten Bremskräfte erzeugt und die Feststellbremsanlage in der Folge die insgesamt von Feststellbremsanlage und Betriebsbremsanlage erzeugten Bremskräfte hält, sodass das Fahrzeug im Stillstand gehalten werden kann.

Der Vorteil der Erfindung besteht darin, dass die von der Feststellbremsanlage zu erzeugenden Bremskräfte begrenzt werden können. Begrenzt z.B. dahingehend, dass nur noch ein einfacher Lastfall abzudecken ist, in dem ein gering beladenes Fahrzeug auf einer im Wesentlichen ebenen Fahrbahn sicher im Stillstand zu halten ist. Somit kann für die elektromechanische Betätigungseinheit ein Elektromotor mit geringerer Leistung sowie eine Getriebeeinheit mit geringerem Unter-/Übersetzungsverhältnis eingesetzt werden, wodurch nicht nur Kostenvorteile erzielt werden, sondern auch die Baugröße der elektromechanischen Betätigungseinheit auf kompaktere Abmessungen reduziert wird.

Weiterhin benutzt die Erfindung in vorteilhafter Weise die zuvor erwähnte Eigenschaft, dass die Getriebeeinheit der elektromechanischen Betätigungseinheit der Feststellbremsanlage selbsthemmend ausgebildet ist. Dadurch kann die Feststellbremsanlage höhere Bremskräfte halten als sie selbst bzw. ihre elektromechanische Betätigungseinheit erzeugen kann. Somit ist die Feststellbremsanlage, obwohl die von ihr erzeugbaren Bremskräfte begrenzt sind, dennoch für Lastfälle geeignet, in denen z.B. ein voll beladenes Fahrzeug auf einer um 30 Prozent und steiler geneigten Fahrbahn sicher im Stillstand zu halten ist.

Die zusätzlich benötigten Bremskräfte werden von der ohnehin vorhandenen Betriebsbremsanlage bereitgestellt, wobei die Erfindung deren zuvor erwähnte Eigenschaft, Bremskräfte automatisch, also unabhängig von einer Fahrerbetätigung, erzeugen zu können, ebenfalls in vorteilhafter Weise benutzt.

Weil die Betriebs- und Feststellbremsanlage elektrisch steuerbar sind, sind eine oder mehrere elektronische Steuereinheiten vorhanden, die über entsprechende Sensormittel oder mathematische Modelle Betriebszustände, z.B. den Beladungszustand des Fahrzeugs und/oder die Neigung der Fahrbahn und/oder die Temperatur der Radbremsen, erfassen. Von daher besteht auch der Vorteil, dass die von der Betriebsbremsanlage bereitzustellenden zusätzlichen Bremskräfte in Abhängigkeit bestimmter Betriebszustände bzw. Lastfälle variabel bzw. individuell einstellbar sind. Dies wirkt sich sehr günstig auf das von der Bremsausrüstung insgesamt aufzubringende Lastkollektiv aus, und kann in Einzelfällen, z.B. wenn das Fahrzeug auf einer ebenen Fahrbahn im Stillstand zu halten ist, sogar bedeuten, dass keine zusätzlichen Bremskräfte von der Betriebsbremsanlage bereitzustellen sind.

In bevorzugter Weise ist vorgesehen, dass die Betriebsbremsanlage die zusätzlich benötigten Bremskräfte zurücknimmt, nachdem die Feststellbremsanlage die von ihr erzeugbaren Bremskräfte erreicht hat. Mit dem Zurücknehmen der zusätzlich benötigten Bremskräfte wird zum einen eine Verstärkung der selbsthemmenden Wirkung der Feststellbremsanlage bzw. deren elektromotorischer Betätigungseinheit erreicht, was vor allem dann die Sicherheit fördernd ist, wenn das Fahrzeug z.B. auf einer steil geneigten Fahrbahn im Stillstand zu halten ist. Zum anderen wird erreicht, dass die Betriebsbremsanlage während der Stillstand- bzw. Parkphase des Fahrzeugs kraftfrei ist, was für eine hydraulische Betriebsbremsanlage wegen dem Risiko von Leckagen vom Gesetzgeber vorgeschrieben ist.

Auch wenn die Feststellbremsanlage aufgrund ihrer selbsthemmenden Wirkung höhere Bremskräfte halten als sie selbst erzeugen kann, so sind in der Regel die von ihr bzw. ihrer elektromechanische Betätigungseinheit erzeugbaren Kräfte ausreichend groß, um die Selbsthemmungskräfte zum Lösen der Feststellbremsanlage zu überkommen. In besonderen Fällen, wenn darüber hinaus Reaktionskräfte zu überkommen sind, z.B. weil das Fahrzeug auf einer sehr steil geneigten Fahrbahn geparkt wurde, kann deshalb vorgesehen werden, dass die Betriebsbremsanlage vorbestimmte Bremskräfte erzeugt, bevor die Feststellbremsanlage die von ihr gehaltenen Bremskräfte zurücknimmt. Auch hierbei kann vorgesehen werden, dass die von der Betriebsbremsanlage zu erzeugenden vorbestimmten Bremskräfte in Abhängigkeit bestimmter Betriebszustände, z.B. dem Beladungszustand des Fahrzeugs und/oder der Neigung der Fahrbahn, variabel bzw. individuell einstellbar sind.

Im Prinzip kann vorgesehen sein, dass bei einer Aktivierung der Feststellbremsanlage das Erzeugen der Bremskräfte durch die Betriebs- und die Feststellbremsanlage gleichzeitig erfolgt.

Allerdings kann z.B. für den Fall, dass durch die Betriebsbremsanlage nur ein verhältnismäßig kleiner Anteil an zusätzlichen Bremskräften bereitzustellen ist, weil z.B. das Fahrzeug unbeladen ist und/oder die Fahrbahn eine flache Neigung aufweist, vorgesehen sein, dass die Betriebsbremsanlage die zusätzlich benötigten Bremskräfte erzeugt, nachdem die Feststellbremsanlage vorbestimmte Bremskräfte erzeugt hat.

Ebenso kann z.B. für den Fall, dass durch die Betriebsbremsanlage ein verhältnismäßig großer Anteil an zusätzlichen Bremskräften bereitzustellen ist, weil z.B. das Fahrzeug beladen ist und/oder die Fahrbahn eine steile Neigung aufweist, vorgesehen sein, dass die Betriebsbremsanlage die zusätzlich benötigten Bremskräfte erzeugt, bevor die Feststellbremsanlage Bremskräfte erzeugt.

Des Weiteren kann der Fall eintreten, dass bei einer Aktivierung der Feststellbremsanlage bereits Bremskräfte durch die Betriebsbremse erzeugt sind. Z.B. weil die Betriebsbremsanlage entweder durch den Fahrer oder im Rahmen einer automatischen Bremsfunktion, wie "Hill-Hold" oder "Auto-Hold" bereits betätigt ist, um das Fahrzeug z.B. auf einer geneigten Fahrbahn im Stillstand zu halten. Auch in diesen Fällen ist vorgesehen, dass die Betriebsbremsanlage zuvor ohnehin erzeugte Bremskräfte als die zusätzlich benötigten Bremskräfte zumindest aufrechterhält.

Es versteht sich, dass die Erfindung auch eine Bremsausrüstung eines Fahrzeugs betrifft, die gemäß dem erfindungsgemäßen Verfahren betrieben wird.

Nachfolgend werden die Erfindung und deren weitere Merkmale anhand der Zeichnung näher erläutert. Dazu zeigt

Fig. 1 ein Ausführungsbeispiel einer Bremsausrüstung, die gemäß dem erfindungsgemäßen Verfahren betrieben werden kann,

Fig. 2     ein Kraft/Zeit-Diagramm eines ersten Ausführungsbeispiels des erfindungsgemäßen Verfahrens beim Betätigen der Feststellbremsanlage,

Fig. 3     ein Kraft/Zeit-Diagramm eines zweiten Ausführungsbeispiels des erfindungsgemäßen Verfahrens beim Betätigen der Feststellbremsanlage,

Fig. 4     ein Kraft/Zeit-Diagramm eines dritten Ausführungsbeispiels des erfindungsgemäßen Verfahrens beim Betätigen der Feststellbremsanlage,

Fig. 5     ein Kraft/Zeit-Diagramm eines vierten Ausführungsbeispiels des erfindungsgemäßen Verfahrens beim Betätigen der Feststellbremsanlage, und

Fig. 6     ein Kraft/Zeit-Diagramm eines Ausführungsbeispiels des erfindungsgemäßen Verfahrens beim Lösen der Feststellbremsanlage,

wobei es sich um vereinfachte schematische Darstellungen handelt, und die verwendeten Bezugszeichen jeweils gleiche Komponenten bezeichnen sowie die gleiche Bedeutung haben.

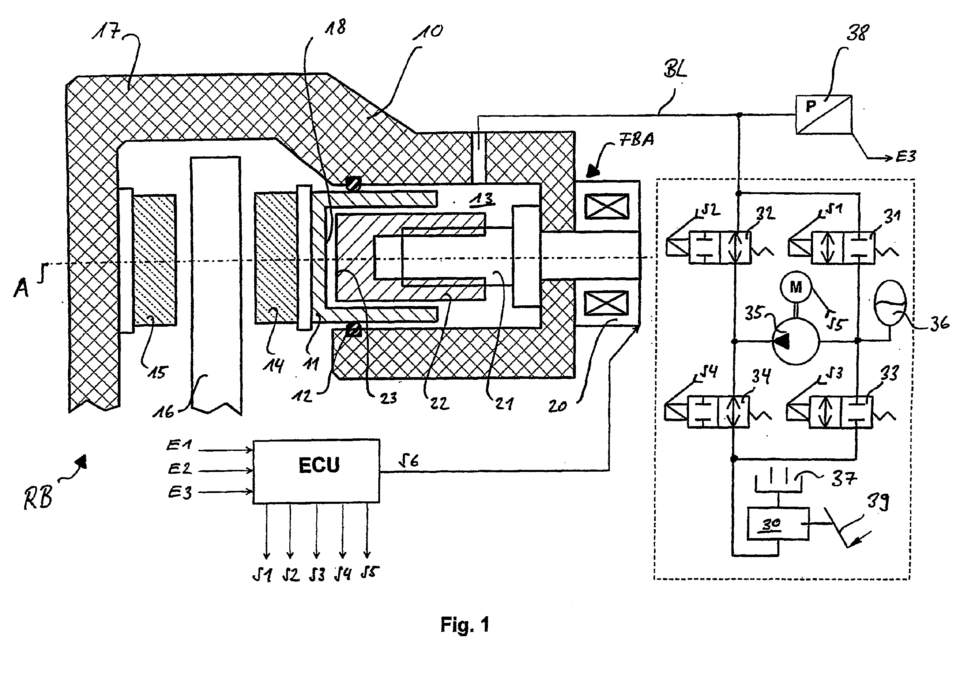

In Fig. 1 ist ein Ausführungsbeispiel einer Bremsausrüstung, die gemäß dem erfindungsgemäßen Verfahren betrieben werden kann, für eine Radbremse RB dargestellt. Die Bremsausrüstung umfasst eine Betriebsbremsanlage BBA, die über eine Bremsleitung BL hydraulisch auf eine Radbremse RB wirkt. In die Radbremse ist eine Feststellbremsanlage FBA mit einer elektromotorischen Betätigungseinheit integriert.

Zur Steuerung/Regelung der Betriebs- und Feststellbremsanlage ist eine gemeinsame elektronische Steuereinheit ECU vorgesehen, in die bzw. in deren Computereinheit das erfindungsgemäße Verfahren vorzugsweise softwaremäßig implementiert ist. Es versteht sich einem Fachmann, dass das Steuern/Regeln der Betriebs- und Feststellbremsanlage auch ausgehend von separaten elektronischen Steuereinheiten, die über ein Kommunikationssystem, z.B. CAN-Bus, Daten austauschen, erfolgen kann.

Die hier in einem Längsschnitt in Bezug auf ihre Längsachse A dargestellte Radbremse RB weist ein Gehäuse 10 auf, in dem ein Bremskolben 11 koaxial zu der Längsachse A verschiebbar aufgenommen ist. Eine Dichtungsanordnung 12 dichtet den Bremskolben 11 gegenüber dem Gehäuse 10 ab, um in dem Gehäuse 10 eine Hydraulikkammer 13 zu bilden. Die Hydraulikkammer 13 ist an die Bremsleitung BL angeschlossen, so dass die Betriebsbremsanlage BBA Hydraulikdruck zum Verschieben des Bremskolbens 11 einleiten kann. Der Bremskolben 11 wirkt unmittelbar auf einen ersten Reibbelag 14, und über einen an dem Gehäuse 10 ausgebildeten Bremssattel 17 gemäß dem Schwimmsattelprinzip mittelbar auf einen zweiten Reibbelag 15. Zwischen dem ersten und zweiten Reibbelag 14, 15 ist ein Drehglied 16 bzw. eine Bremsscheibe angeordnet, das (nicht näher dargestellt) drehfest mit einem Rad des Fahrzeugs verbunden ist. Erfolgt aufgrund eines in die Hydraulikkammer 13 eingeleiteten Hydraulikdrucks eine Verschiebung des Bremskolbens 11, so werden zum Erzeugen von Bremskraft die Reibbeläge 14, 15 gegen die Seitenflächen des Drehglieds 16 gespannt.

Die elektromotorische Betätigungseinheit der Feststellbremsanlage FBA weist einen Elektromotor 20 auf, der von der elektrischen Steuereinheit ECU über Steuersignale S6 elektrisch ansteuerbar ist. Der Elektromotor 20 treibt eine nach Art einer Mutter/Spindel-Anordnung 21, 22 funktionierende Getriebeeinheit an, durch die die Drehbewegung des Elektromotors 20 in eine Längsbewegung für ein Stellelement 23 umgesetzt wird. Das Stellelement 23 ist koaxial zu der Längsachse A verschiebbar, innerhalb der Hydraulikkammer 13 angeordnet und wirkt auf den Boden 18 des Bremskolbens 11. Dadurch wird bei Ansteuerung des Elektromotors 20 eine Verschiebung des Bremskolbens 11 bewirkt, so dass zum Erzeugen von Bremskraft die Reibbeläge 14, 15 gegen die Seitenflächen des Drehglieds 16 gespannt werden. Wird die Ansteuerung des Elektromotors 20 zurückgenommen bzw. abgeschaltet, so wird die durch Zuspannen der Reibbeläge 14, 15 erzeugte Bremskraft mechanisch festgehalten, weil die nach Art einer Mutter/Spindel-Anordnung 21, 22 funktionierende Getriebeeinheit für die Feststellbremsfunktion selbsthemmend ausgebildet ist. Ein Zurücknehmen der Bremskraft zum Lösen der Feststellbremsfunktion ist nur durch erneute Ansteuerung des Elektromotors 20 in umgekehrter Drehrichtung möglich, wobei das Stellelement 23 vom Boden 18 des Bremskolbens 11 weg bewegt wird.

Die als hydraulisches Schaltbild für eine Radbremse RB dargestellte Betriebsbremsanlage BBA ist von der elektronischen Steuereinheit ECU über Steuersignale S1 bis S5 elektrisch ansteuerbar. Dabei sind die elektromagnetisch steuerbaren Ventilanordnungen 31 bis 34 jeweils in ihrer elektrisch unbetätigten Grundstellung gezeigt. Die Pumpe 35 ist über einen elektromotorischen Antrieb M steuerbar.

Im Fall einer konventionellen Bremsung, wobei der Fahrer ein Bremspedal 39 betätigt, wird in einer Bremsdruckgebereinheit 30 ein Hydraulikdruck erzeugt, der auf-grund der geöffneten Sperrventile 32 und 34 über die Bremsleitung BL in die Hydraulikkammer 13 der Radbremse RB eingeleitet wird.

Um den in die Hydraulikkammer 13 eingeleiteten Hydraulikdruck z.B. für eine ABS-Bremsung durch zeitlichen Wechsel zwischen Druckabbau-, Druckhalte- und Druckaufbauphasen zu modulieren, steuert die elektronische Steuereinheit ECU über die Steuersignale S1, S2 und S5 das Durchlassventil 31, das Sperrventil 32 und die Pumpe 35 wie folgt an: Zum Druckabbau werden sowohl das Durchlassventil 31, als auch das Sperrventil 32 angesteuert, so dass in die Hydraulikkammer 13 eingelassene Hydraulikflüssigkeit in den Niederdruckspeicher 36 abgelassen wird. Zum Druckhalten wird nur das Sperrventil 32 angesteuert, so dass in die Hydraulikkammer 13 eingelassene Volumen Hydraulikflüssigkeit unverändert bleibt. Zum Druckaufbau werden weder das Durchlassventil 31, noch das Sperrventil 32 angesteuert, so dass in die Hydraulikkammer 13 wieder Hydraulikflüssigkeit eingelassen wird. Während der Druckmodulation wird die Pumpe 35 zumindest zeitweise angesteuert, um in den Niederdruckspeicher 36 abgelassene Hydraulikflüssigkeit zum Druckaufbau in die Bremsleitung BL zurückzufördern.

Zum Ausführen von automatischen, also von einer Fahrerbetätigung unabhängigen Bremsfunktionen, wie z.B. ESP, steuert die elektronische Steuereinheit ECU zunächst über die Steuersignale S3, S4 und S5 das Durchlassventil 33, das Sperrventil 34 und die Pumpe 35 an. Dadurch ist die Saugseite der Pumpe 35 mit dem Reservoir 37 der Bremsdruckgebereinheit 30 verbunden, so dass sie dort Hydraulikflüssigkeit entnehmen kann, um diese aufgrund des geöffneten Sperrventils 32 über die Bremsleitung BL in die Hydraulikkammer 13 der Radbremse RB einzuleiten. Sofern auch hier eine Druckmodulation erforderlich ist, kann diese wie zuvor beschrieben seitens der elektronischen Steuereinheit ECU durch weitere Ansteuerung des Durchlassventils 31 und des Sperrventils 32 über die Steuersignale S1 und S2 erfolgen.

Der elektronischen Steuereinheit ECU werden über Eingangssignale E1 von entsprechenden (nicht näher dargestellten) Sensormitteln erfasste Informationen über Betriebszustände des Fahrzeugs zur Verarbeitung zugeführt. Unter anderen die Drehzahlen der Drehglieder 16 bzw. der zugehörigen Räder des Fahrzeugs, um unter anderem den Stillstand des Fahrzeugs zu erkennen, die Neigung der Fahrbahn, auf der das Fahrzeug im Stillstand zu halten ist, und den Beladungszustand des Fahrzeugs. Es versteht sich einem Fachmann, dass sich einige Sensormittel, z.B. Neigungssensoren, auch in die elektronische Steuereinheit integrieren lassen, um Vorteile hinsichtlich Kosten und Störanfälligkeit zu erzielen.

Über die Eingangssignale E2 wird der elektronischen Steuereinheit ECU von einem entsprechenden (nicht näher dargestellten) Schaltmittel, das vom Fahrer bedienbar ist, mitgeteilt, dass eine Ansteuerung der Feststellbremsanlage FBA gewünscht ist, um das Fahrzeug im Stillstand zu halten. Darüber hinaus kann im Rahmen einer "Hill-Holz"- oder "Auto-Hold"-Funktion auch eine vom Fahrerwillen unabhängige, also automatische, Ansteuerung der Feststellbremsanlage FBA erfolgen, z.B. wenn nach Überschreiten einer bestimmten Zeitdauer das Fahrzeug nicht mehr durch die Betriebsbremsanlage BBA, sondern durch die Feststellbremsanlage FBA im Stillstand zu halten ist.

Optional kann auch ein Drucksensor 38 vorgesehen sein, der den in der Hydraulikkammer 13 bzw. Bremsleitung BL erzeugten Druck erfasst, und über Eingangssignale E3 an die elektronische Steuereinheit ECU übermittelt. Der in der Hydraulikkammer 13 erzeugte Druck ist nämlich proportional zu der Bremskraft, die beim Spannen der Reibbeläge 14, 15 gegen die Seitenflächen des Drehgliedes 16 erzeugt wird, und somit eine zum Regeln/Steuern der Bremsausrüstung relevante Größe. Zusätzlich oder wenn ein Drucksensor 38 nicht vorhanden ist, kann die Bremskraft anhand mathematischer Modelle ermittelt werden. Im Fall der Feststellbremsanlage FBA, z.B. auf Grundlage der Stromaufnahme des Elektromotors 20; im Fall der Betriebsbremsanlage BBA, z.B. durch Auswertung der Ansteuerzeiten der Ventilanordnungen 31 bis 34 und der Pumpe 35.

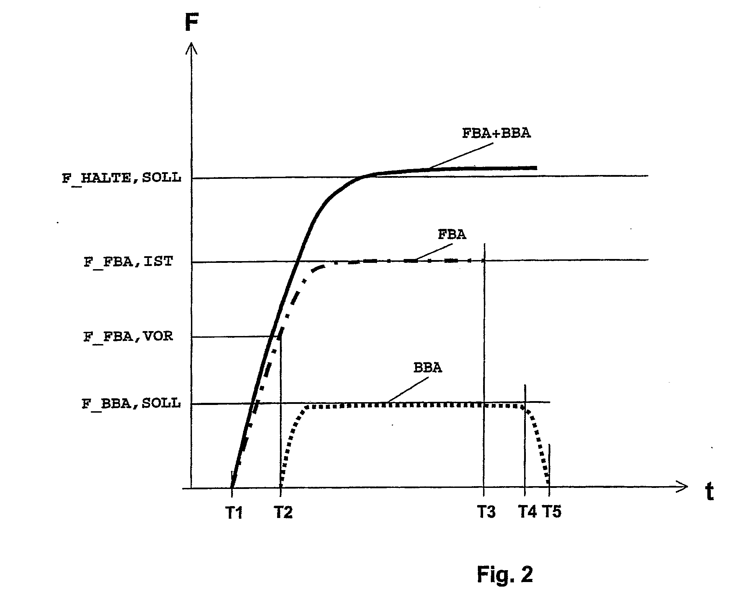

In Fig. 2 ist ein erstes Ausführungsbeispiel des erfindungsgemäßen Verfahrens beim Betätigen der Feststellbremsanlage anhand eines Kraft/Zeit-Diagramms gezeigt. Zum Zeitpunkt T1 liegt ein Ansteuerwunsch für die Feststellbremsanlage FBA vor, so dass diese beginnt elektromechanisch Bremskraft aufzubauen, die, wie im strichpunktierten Kurvenverlauf dargestellt, auf einen Wert F_FBA,IST begrenzt ist. Im Intervall zwischen den Zeitpunkten T1 und T2 wertet die elektronische Steuereinheit ECU den aktuellen Betriebszustand (Beladung, Neigung der Fahrbahn, usw.) des Fahrzeugs aus, um die Bremskraft F_HALTE,SOLL zu bestimmen, die mindestens erforderlich ist, das Fahrzeug für diesen Betriebszustand im Stillstand zu halten. Da hier die erforderliche Bremskraft F_HALTE,SOLL größer ist als die von der Feststellbremsanlage FBA selbst erzeugbare Bremskraft F_FBA,IST, wird ab dem Zeitpunkt T2 durch automatisches Ansteuern der Betriebsbremsanlage BBA, wie im punktierten Kurvenverlauf dargestellt, die zusätzlich benötigte Bremskraft F_BBA,SOLL hydraulisch erzeugt. Um die Betätigungsdauer möglichst kurz zu halten, kann der Zeitpunkt T2 kurz nach dem Zeitpunkt T1 gewählt werden, und z.B. davon abhängig sein, dass die Feststellbremsanlage FBA eine vorbestimmte Bremskraft F_FBA,VOR erzeugt hat, die kleiner oder gleich ist als die von der Feststellbremsanlage FBA selbst erzeugbare Bremskraft F_FBA,IST (F_FBA,VOR <= F_FBA,IST). Der zusätzliche Bremskraftanteil F_BBA,SOLL ist variabel und ergibt sich im Wesentlichen aus der (absoluten) Differenz zwischen der erforderlichen Bremskraft F_HALTE,SOLL und der erzeugbaren Bremskraft F_FBA,IST, die zur Sicherheit vorzugsweise erhöht wird, z.B. durch Addition eines Wertes F_OFFSET, demzufolge sich ergibt:

$$F\_BBA,SOLL = \mid F\_HALTE,SOLL - F\_FBA,IST \mid + F\_OFFSET,$$

oder durch Multiplikation mit einem Wert F_FAKTOR, der größer als eins ist (F_FAKTOR > 1,0), demzufolge sich ergibt:

$$F\_BBA,SOLL = |\ F\_HALTE,SOLL - F\_FBA,IST\ |\ *\ F\_FAKTOR.$$

Somit ergibt sich, dass die an dem Drehglied 16 erzeugte Gesamtbremskraft etwas oberhalb der Schwelle für die erforderliche Bremskraft F_HALTE,SOLL verläuft, wie im durchgezogenen Kurvenverlauf dargestellt. Zum Zeitpunkt T3 wird die Ansteuerung der Feststellbremsanlage FBA zurückgenommen, was aufgrund der selbsthemmend ausgebildeten Getriebeeinheit 21, 22 keinen Einfluss auf die Gesamtbremskraft hat. Selbiges gilt, wenn zum Zeitpunkt T4, also nachdem die Feststellbremsanlage FBA die von ihr erzeugbaren Bremskräfte erreicht hat, die Ansteuerung der Betriebsbremsanlage BBA zurückgenommen wird. Dabei wird die in die Hydraulikkammer 13 zuvor eingelassene Hydraulikflüssigkeit abgelassen, so dass die Radbremse RB in der sich ab dem Zeitpunkt T5 beginnenden Stillstands- bzw. Parkphase hydraulisch kraftfrei gestellt bleibt.

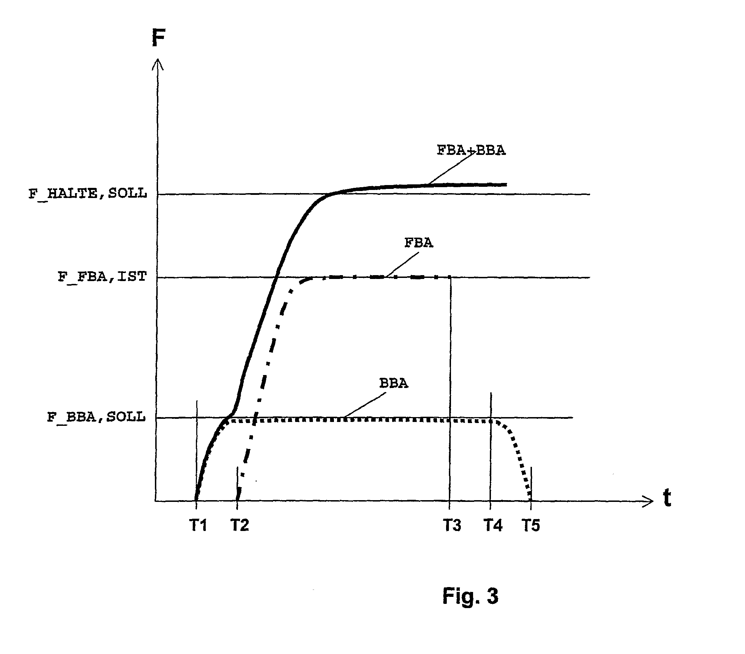

Bei dem in Fig. 3 gezeigten, zweiten Ausführungsbeispiel, wird bei Vorliegen eines Ansteuerwunsches für die Feststellbremsanlage FBA zum Zeitpunkt T1, durch automatisches Ansteuern der Betriebsbremsanlage BBA, wie im punktierten Kurvenverlauf dargestellt, die zusätzlich benötigte Bremskraft F_BBA,SOLL hydraulisch erzeugt. Daraufhin wird zum Zeitpunkt T2 durch die Feststellbremsanlage FBA elektromechanisch die Bremskraft F_BBA,IST aufgebaut, wie im strichpunktierten Kurvenverlauf dargestellt, so dass sich an dem Drehglied 16 die im durchgezogenen Kurvenverlauf dargestellte Gesamtbremskraft ergibt, die wie in Fig. 2 etwas oberhalb der Schwelle für die erforderliche Bremskraft F_HALTE,SOLL liegt. Wie bei Fig. 2 wird auch hier zum Zeitpunkt T3 die Ansteuerung der Feststellbremsanlage FBA und zum Zeitpunkt T4 die Ansteuerung der Betriebsbremsanlage BBA zurückgenommen, ohne dass sich dies aus den zuvor schon erwähnten Gründen auf den Verlauf der Gesamtbremskraft auswirkt.

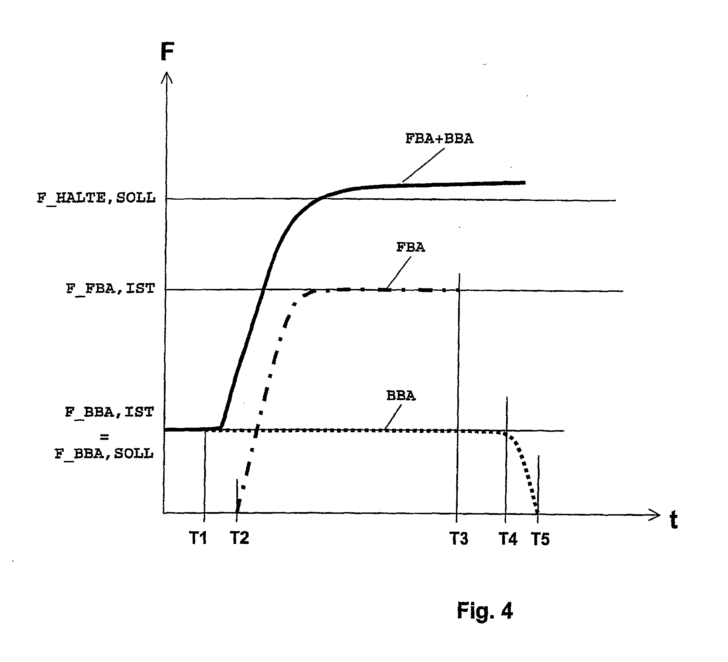

Das in Fig. 4 gezeigte dritte Ausführungsbeispiel zeigt den Fall, dass vor Vorliegen eines Ansteuerwunsches für die Feststellbremsanlage FBA zum Zeitpunkt T1 durch die Betriebsbremsanlage BBA bereits eine Bremskraft F_BBA,IST hydraulisch eingesteuert ist, sei es, weil der Fahrer das Bremspedal 39 betätigt hat, und/oder weil eine automatische Bremsfunktion wie z.B. "Hill-Hold" oder "Auto-Hold" ausgeführt wird. Hier wird ab dem Zeitpunkt T1 die von der Betriebsbremsanlage BBA ohnehin erzeugte Bremskraft F_BBA,IST als zusätzlich benötigte Bremskraft F_BBA,SOLL aufrechterhalten. Ansonsten wird analog zu Fig. 3 verfahren.

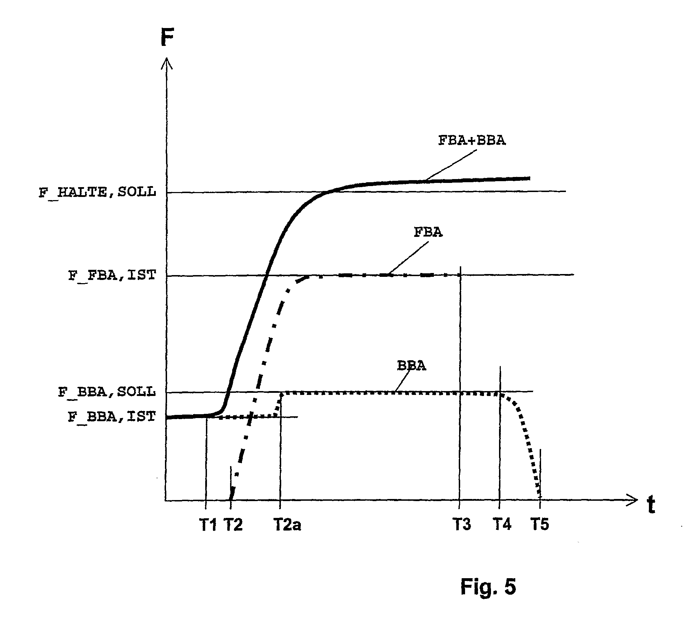

Gegenüber Fig. 4 zeigt das vierte Ausführungsbeispiel nach Fig. 5 den Fall, dass die von der Betriebsbremsanlage BBA ohnehin erzeugte Bremskraft F_BBA,IST als zusätzlich benötigte Bremskraft F_BBA,SOLL nicht ausreichend ist. Deshalb erfolgt durch automatisches Ansteuern der Betriebsbremsanlage BBA, wie im punktierten Kurvenverlauf dargestellt, zum Zeitpunkt T2a eine Erhöhung des hydraulischen Bremskraftanteils auf F_BBA,SOLL. Ansonsten wird analog zu Fig. 3 bzw. 4 verfahren.

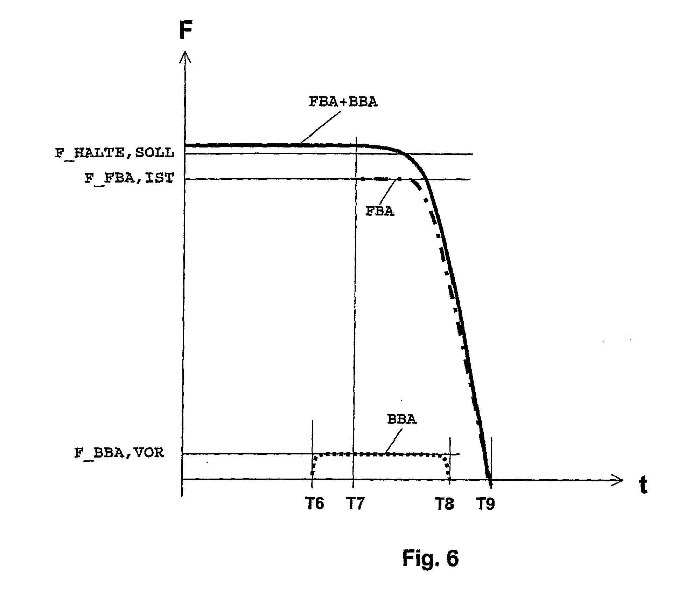

Fig. 6 zeigt anhand eines Kraft/Zeit-Diagramms ein Ausführungsbeispiel des erfindungsgemäßen Verfahrens beim Lösen der Feststellbremsanlage. Hier wird davon ausgegangen, dass sich das Fahrzeug in der Stillstands- bzw. Parkphase befindet, die gemäß Fig. 2 bis 5 ab dem Zeitpunkt T5 beginnt. Zum Zeitpunkt T7, wenn ein Zurücknahmewunsch für die Feststellbremsanlage FBA vorliegt, wird der elektromechanische Bremskraftanteil zurückgenommen, wie im strichpunktierten Kurvenverlauf dargestellt, wodurch die an dem Drehglied 16 wirkende Gesamtbremskraft wie im durchgezogenen Kurvenverlauf dargestellt abnimmt, bis die Radbremse RB ab dem Zeitpunkt T9 wieder vollständig, also elektromechanisch und hydraulisch, kraftfrei gestellt ist. Sollte es für die Zurücknahme des elektromechanischen Bremskraftanteils erforderlich sein, Selbsthemmungskräfte zu überkommen, dann kann optional vorgesehen sein, dass bevor die Feststellbremsanlage die von ihr gehaltenen Bremskräfte zurückzunehmen beginnt, zum Zeitpunkt T6 durch die Betriebsbremsanlage BBA eine vorbestimmte Bremskraft F_BBA,VOR erzeugt wird, wie im strichpunktierten Kurvenverlauf dargestellt. Eine Zurücknahme der vorbestimmten Bremskraft F_BBA,VOR erfolgt dann vorzugsweise zum Zeitpunkt T8, also bevor die am Drehglied 16 wirkende Gesamtkraft vollständig abgebaut ist. Auch für die vorbestimmte Bremskraft F_BBA,VOR gilt, dass sie, sofern sie überhaupt erforderlich, variabel in Abhängigkeit vom aktuellen Betriebszustand (Beladung, Neigung der Fahrbahn, usw.) einstellbar ist.

## Patentansprüche

1. Verfahren zum Betreiben einer Bremsausrüstung eines Fahrzeugs zum Halten des Fahrzeugs im Stillstand, wobei die Bremsausrüstung

   - eine elektrisch steuerbare Betriebsbremsanlage (BBA) umfasst, die dazu eingerichtet ist, unabhängig von einer Fahrerbetätigung Bremskräfte zu erzeugen, und

- eine elektrisch steuerbare Feststellbremsanlage (FBA) umfasst, die dazu eingerichtet ist, Bremskräfte zu erzeugen und diese zu halten,

**dadurch gekennzeichnet, dass**
die Feststellbremsanlage (FBA) selbsthemmend ausgebildet ist und dadurch dazu ausgelegt ist, Bremskräfte zu halten, die größer sind als die Bremskräfte, die sie selbst erzeugen kann, wobei dann, wenn die Feststellbremsanlage (FBA) in bestimmten Betriebszuständen erforderliche Bremskräfte (F_HALTE, SOLL) zu halten hat, die größer sind als die Bremskräfte (F_FBA, IST), die sie selbst erzeugen kann, die Betriebsbremsanlage (BBA) die zusätzlich benötigten Bremskräfte (F_BBA, SOLL) erzeugt, und die Feststellbremsanlage (FBA) in der Folge die insgesamt von Feststellbremsanlage (FBA) und Betriebsbremsanlage (BBA) erzeugten Bremskräfte (F_FBA, IST; F_BBA, SOLL) hält, sodass das Fahrzeug im Stillstand gehalten werden kann.

2. Verfahren nach Anspruch 1, **dadurch gekennzeichnet, dass** bei einem Betätigen der Feststellbremsanlage (FBA) zum Aufbau und Halten von Bremskräften die Betriebsbremsanlage (BBA) die zusätzlich benötigten Bremskräfte zurücknimmt, nachdem die Feststellbremsanlage (FBA) ihre erzeugbaren Bremskräfte erreicht hat.

3. Verfahren nach Anspruch 1 oder 2, **dadurch gekennzeichnet, dass** bei einem Betätigen der Feststellbremsanlage (FBA) zum Lösen von Bremskräften die Betriebsbremsanlage (BBA) vorbestimmte Bremskräfte erzeugt, bevor die Feststellbremsanlage (FBA) ihre gehaltenen Bremskräfte zurücknimmt.

4. Verfahren nach einem der Ansprüche 1 bis 3, **dadurch gekennzeichnet, dass** bei einem Betätigen der Feststellbremsanlage (FBA) zum Aufbau und Halten von Bremskräften die Betriebsbremsanlage (BBA) die zusätzlich benötigten Bremskräfte erzeugt, nachdem die Feststellbremsanlage (FBA) vorbestimmte Bremskräfte erzeugt hat.

5. Verfahren nach einem der Ansprüche 1 bis 4, **dadurch gekennzeichnet, dass** bei einem Betätigen der Feststellbremsanlage (FBA) zum Aufbau und Halten von Bremskräften die Betriebsbremsanlage (BBA) die zusätzlich benötigten Bremskräfte erzeugt, bevor die Feststellbremsanlage (FBA) Bremskräfte erzeugt.

6. Verfahren nach einem der Ansprüche 1 bis 5, **dadurch gekennzeichnet, dass** die Betriebsbremsanlage (BBA) zuvor ohnehin erzeugte Bremskräfte als die zusätzlich benötigten Bremskräfte zumindest aufrechterhält.

7. Bremsausrüstung eines Fahrzeugs, die gemäß einem Verfahren nach einem der Ansprüche 1 bis 6 zum Halten des Fahrzeugs im Stillstand betrieben wird, wobei die Bremsausrüstung

- eine elektrisch steuerbare Betriebsbremsanlage (BBA) umfasst, die dazu eingerichtet ist, unabhängig von einer Fahrerbetätigung Bremskräfte zu erzeugen, und
- eine elektrisch steuerbare Feststellbremsanlage (FBA) umfasst, die dazu eingerichtet ist, Bremskräfte zu erzeugen und diese zu halten,

**dadurch gekennzeichnet, dass**
die Feststellbremsanlage (FBA) selbsthemmend ausgebildet ist und dadurch dazu ausgelegt ist, Bremskräfte zu halten, die größer sind als die Bremskräfte, die sie selbst erzeugen kann, wobei dann, wenn die Feststellbremsanlage (FBA) in bestimmten Betriebszuständen erforderliche Bremskräfte (F_HALTE, SOLL) zu halten hat, die größer sind als die Bremskräfte (F_FBA, IST), die sie selbst erzeugen kann, die Betriebsbremsanlage (BBA) derart ansteuerbar ist, dass sie die zusätzlich benötigten Bremskräfte (F_BBA, SOLL) erzeugt, und die Feststellbremsanlage (FBA) in der Folge die insgesamt von Feststellbremsanlage (FBA) und Betriebsbremsanlage (BBA) erzeugten Bremskräfte (F_FBA, IST; F_BBA, SOLL) hält, sodass das Fahrzeug im Stillstand gehalten werden kann.

**Claims**

1. Method for operating a brake arrangement of a vehicle for holding the vehicle at standstill, wherein the brake arrangement comprises:

- an electrically controllable service brake system (BBA), which is set to generate brake forces independently of driver actuation, and
- an electrically controllable parking brake system (FBA), which is set to generate brake forces and maintain these forces,

**characterised in that**
the parking brake system (FBA) is configured to be self-locking and thus designed to maintain brake forces which are greater than the brake forces it is able to generate itself, wherein
when, in certain operating conditions, the parking brake system (FBA) has to maintain required brake forces (F_HALTE, SOLL) which are greater than the brake forces (F_FBA, IST) it is able to generate itself, the service brake system (BBA) generates the additionally required brake forces (F_BBA, SOLL) and the parking brake system (FBA) then maintains the brake forces (F_FBA, IST; F_BBA, SOLL) generated as a whole by the parking brake system (FBA) and service brake system (BBA), so that the vehicle can be held at standstill.

2. Method according to Claim 1, **characterised in that** when actuating the parking brake system (FBA) for generating and maintaining brake forces, the service brake system (BBA) withdraws the additionally required brake forces after the parking brake system (FBA) has reached the brake forces which it is able to generate.

3. Method according to Claim 1 or 2, **characterised in that** when actuating the parking brake system (FBA) for releasing braking forces, the service brake system (BBA) generates predetermined brake forces before the parking brake system (FBA) withdraws the brake forces maintained by it.

4. Method according to one of Claims 1 to 3, **characterised in that** when actuating the parking brake system (FBA) for generating and maintaining brake forces, the service brake system (BBA) generates the additionally required brake forces after the parking brake system (FBA) has generated predetermined brake forces.

5. Method according to one of Claims 1 to 4, **characterised in that** when actuating the parking brake system (FBA) for generating and maintaining brake forces, the service brake system (BBA) generates the additionally required brake forces before the parking brake system (FBA) generates brake forces.

6. Method according to one of Claims 1 to 5, **characterised in that** the service brake system (BBA) at least maintains brake forces which are already generated in any case as the additionally required brake forces.

7. Brake arrangement of a vehicle, which is operated according to a method according to one of Claims 1 to 6 for holding the vehicle at standstill, wherein the brake arrangement comprises:

   - an electrically controllable service brake system (BBA), which is set to generate brake forces independently of driver actuation, and
   - an electrically controllable parking brake system (FBA), which is set to generate brake forces and maintain these forces,

**characterised in that**
the parking brake system (FBA) is configured to be self-locking and thus designed to maintain brake forces which are greater than the brake forces it is able to generate itself, wherein
when, in certain operating conditions, the parking brake system (FBA) has to maintain required brake forces (F_HALTE, SOLL) which are greater than the brake forces (F_FBA, IST) it is able to generate itself, the service brake system (BBA) can be controlled in such a way that it generates the additionally required brake forces (F_BBA, SOLL) and the parking brake system (FBA) then maintains the brake forces (F_FBA, IST; F_BBA, SOLL) generated as a whole by the parking brake system (FBA) and service brake system (BBA), so that the vehicle can be held at standstill.

**Revendications**

1. Procédé servant à faire fonctionner un équipement de freinage d'un véhicule afin de maintenir le véhicule à l'arrêt, l'équipement de freinage comportant

   - un système de frein de service (BBA) à commande électrique conçu pour générer des forces de freinage indépendamment d'un actionnement de la part du conducteur, et
   - un système de frein de stationnement (FBA) à commande électrique conçu pour générer des forces de freinage et à les maintenir,

**caractérisé en ce que**

le système de frein de stationnement (FBA) est réalisé autobloquant et de ce fait apte à maintenir les forces de freinage qui sont supérieures aux forces de freinage qu'il peut générer lui-même, le système de frein de service (BBA) générant alors les forces de freinage supplémentaires nécessaires lorsque le système de frein de stationnement (FBA) doit, pour certains états de service, maintenir les forces de freinage requises (F_HALTE, SOLL) qui sont supérieures aux forces de freinage (F_FBA, IST) qu'il peut générer lui-même, et le système de frein de stationnement (FBA) maintenant par la suite les forces freinage générées (F_FBA, IST ; F_BBA, SOLL) et par le système de frein de stationnement (FBA) et par le système de frein de service (BBA) si bien que le véhicule peut être maintenu à l'arrêt.

2.  Procédé selon la revendication 1, **caractérisé en ce que** lors d'un actionnement du système de frein de stationnement (FBA) pour l'établissement et le maintien de forces de freinage, le système de frein de service (BBA) réduit les forces de freinage supplémentaires nécessaires après que le système de frein de stationnement (FBA) a atteint les forces de freinage qu'il est en mesure de générer.

3.  Procédé selon la revendication 1 ou 2, **caractérisé en ce que** lors d'un l'actionnement du système de frein de stationnement (FBA) pour relâcher des forces de freinage, le système de frein de service (BBA) génère des forces de freinage prédéterminées avant que le système de frein de stationnement (FBA) réduise ses forces de freinage maintenues.

4.  Procédé selon l'une des revendications 1 à 3, **caractérisé en ce que** lors d'un actionnement du système de frein de stationnement (FBA) pour l'établissement et le maintien de forces de freinage, le système de frein de service (BBA) génère les forces de freinage supplémentaires nécessaires après que le système de frein de stationnement (FBA) a généré des forces de freinage prédéterminées.

5.  Procédé selon l'une des revendications 1 à 4, **caractérisé en ce que** lors d'un actionnement du système de frein de stationnement (FBA) pour l'établissement et le maintien de forces de freinage, le système de frein de service (BBA) génère les forces de freinage supplémentaires avant que le système de frein de stationnement (FBA) génère des forces de freinage.

6.  Procédé selon l'une des revendications 1 à 5, **caractérisé en ce que** les forces de freinage générées au préalable en tout état de cause sont pour le moins maintenues en tant que forces de freinage supplémentaires nécessaires par le système de frein de service (BBA).

7.  Equipement de freinage d'un véhicule fonctionnant conformément à un procédé selon l'une des revendications 1 à 6 pour maintenir le véhicule à l'arrêt, l'équipement de freinage comportant

    - un système de frein de service (BBA) à commande électrique conçu pour générer des forces de freinage indépendamment de l'actionnement de la part du conducteur, et
    - un système de frein de stationnement (FBA) à commande électrique conçu pour générer des forces de freinage et les maintenir,

    **caractérisé en ce que**
    le système de frein de stationnement (FBA) est réalisé autobloquant et de ce fait apte à maintenir les forces de freinage qui sont supérieures aux forces de freinage qu'il peut générer lui-même, le système de frein de service (BBA) pouvant alors, lorsque le système de frein de stationnement (FBA) doit, pour certains états de service, maintenir les forces de freinage requises (F_HALTE,SOLL)qui sont supérieures aux forces de freinage (F_FBA, IST) qu'il peut générer lui-même, être commandé de telle manière qu'il génère les forces de freinage supplémentaires nécessaires (F_BBA, SOLL), et le système de frein de stationnement (FBA) maintenant par la suite les forces freinage générées (F_FBA, IST ; F_BBA, SOLL) et par le système de frein de stationnement (FBA) et par le système de frein de service (BBA) si bien que le véhicule peut être maintenu à l'arrêt.

Fig. 1

Fig. 2

EP 1 708 912 B1

Fig. 3

EP 1 708 912 B1

Fig. 4

Fig. 5

EP 1 708 912 B1

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10150803 A1

- US 20010023799 A1